# EUROPÄISCHE PATENTSCHRIFT

(11) **EP 2 254 778 B1**
(45) Veröffentlichungstag und Bekanntmachung des Hinweises auf die Patenterteilung: **15.05.2013**
(21) Anmeldenummer: 08873395.1
(22) Anmeldetag: 19.12.2008
(51) Int. Cl.: B60T 13/38, B60T 13/68

(54) **BREMSANLAGE FÜR EIN FAHRZEUG**
BRAKE SYSTEM FOR A VEHICLE
SYSTÈME DE FREIN POUR VÉHICULE

(30) Priorität: 15.03.2008 DE 102008014547
(43) Veröffentlichungstag der Anmeldung: 01.12.2010
(73) Patentinhaber: WABCO GmbH, 30453 Hannover (DE)
(72) Erfinder: BENSCH, Uwe, 30161 Hannover (DE); KIEL, Bernd-Joachim, 31515 Wunstorf (DE); MENZE, Wilfried, 31832 Springe (DE); ROSENDAHL, Hartmut, 30167 Hannover (DE)
(74) Vertreter: Lauerwald, Jörg
(86) Internationale Anmeldenummer: PCT/EP2008/010891
(87) Internationale Veröffentlichungsnummer: WO 2009/115111

(56) Entgegenhaltungen:
- DE-A1- 4 327 759
- DE-A1- 10 336 611
- DE-U1- 20 122 549

## Beschreibung

Die Erfindung betrifft eine druckluftbetriebene Bremsanlage für ein Fahrzeug, wie sie bspw. aus DE 103 36 611 A1 bekannt ist. Eine derartige Bremsanlage weist eine Betriebsbremsfunktion und eine Feststellbremsfunktion auf. Mittels der Betriebsbremsfunktion sind Membranteile von Bremszylindern mit Druckluft mit einem aussteuerbaren Betriebsbremsdruck belüftbar. Mittels der Feststellbremsfunktion sind Federspeicherteile von Bremszylindern, insbesondere von die Membranteile umfassenden kombinierten Federspeicher-/Membranbremszylindern, mit Druckluft mit einem elektropneumatisch aussteuerbaren Feststellbremsdruck belüftbar.

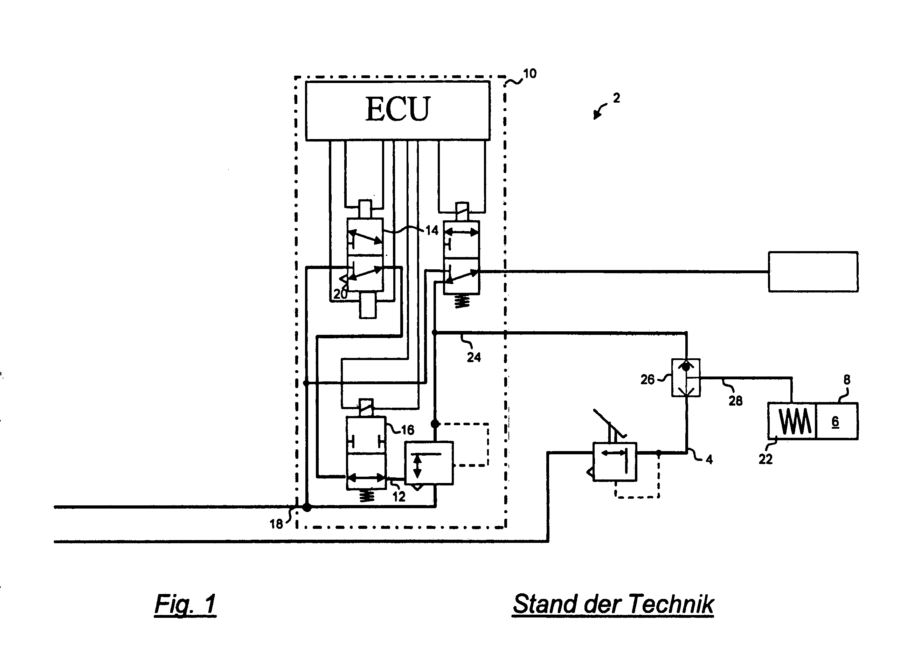

Ferner weisen bekannte Bremsanlagen eine Übedastschutzfunktion für die Bremszylinder auf. Dies soll anhand der den Stand der Technik zeigenden Fig. 1 näher erläutert werden.

Fig. 1 zeigt Teile einer Bremsanlage 2, welche eine erste Druckluftleitung 4 aufweist, in welcher Druckluft mit einem aussteuerbaren Betriebsbremsdruck bereitstellbar ist. Mittels dieses Betriebsbremsdrucks ist ein Membranteil 6 eines Bremszylinders 8, welcher als kombinierter Federspeicher-/Membranbremszylinder ausgebildet ist, zum Einlegen einer Bremse belüftbar, um ein diese Bremsanlage 2 aufweisendes Fahrzeug abzubremsen. Ein Entlüften des Membranteils 6 löst diese Bremse wieder.

Die Bremsanlage 2 weist des Weiteren eine Feststellbremseinrichtung 10 mit einer zweiten Druckluftleitung 12 auf. Mittels dieser Fesistellbremseinrichtung 10, insbesondere mittels darin befindlicher Elektromagnetventile 14 und 16, ist elektropneumatisch ein Feststellbremsdruck aussteuerbar und Druckluft mit diesem Feststellbremsdruck der zweiten Druckluftleitung 12 bereitstellbar. Hierfür weist die Feststellbremseinrichtung 10 einen Belüftungseingang 18 auf, über welchen die zweite Druckluftleitung 12 zur Erhöhung des Feststellbremsdrucks mit Druckluft belüftbar ist, und weist ferner einen Entlüftungsausgang 20 auf, über welchen diese zweite Druckluftleitung 12 zur Reduzierung dieses Feststellbremsdrucks entlüftbar ist.

Neben dem Membranteil 6 weist dieser Bremszylinder 8 einen Federspeicherteil 22 auf. Dieser Federspeicherteil 22 ist mit dem ausgesteuerten und in der zweiten Druckluftleitung 12 vorliegenden Feststellbremsdruck belüftbar. Druckluft mit diesem Feststellbremsdruck gelangt hierbei über eine Druckluftleitung 24, ein Überlastschutzventil 26 und eine Druckluftleitung 28 in diesen Federspeicherteil 22. Dieses Überlastschutzventil 26 ist hierbei als Wechselventil bzw. Select-High-Ventil mit zwei Drucklufteingängen und einem Druckluftausgang ausgebildet. Dieses Wechselventil 26 verbindet pneumatisch den Eingang, an welchem der höhere von zwei an diesen Eingängen anliegenden pneumatischen Drücken anliegt, mit dem Ausgang.

Mittels einer Feder in dem Federspeicherteil 22 des Bremszylinders 8 ist eine Federkraft bereitstellbar, mittels der eine Bremse von diesem Bremszylinder 8 betätigbar ist. Im Falle des entlüfteten Federspeicherteils 22 ist hierbei diese Bremse mittels der Feststellbremsfunktion betätigt. Die Betätigung der Bremse mittels der Feder ist besonders gut zum Abstellen des Fahrzeugs geeignet, da diese Bremse mittels des Bremszylinders 8 somit auch bei einem Druckverlust in einer Druckluftleitung allein mittels der Federkraft eingelegt bleibt. Im Fahrbetrieb des Fahrzeugs wird der Federspeicherteil 22 mit wenigstens dem Feststellbremsdruck belüftet. Der Feststellbremsdruck wirkt hierbei der Federkraft entgegen, so dass ab einem durch die Beschaffenheit der Feder vorgegebenen Mindestdruck für den Feststellbremsdruck die Bremse nicht mehr mittels der Feststellbremsfunktion betätigt ist.

Ein gleichzeitig mittels der Betriebsbremsfunktion und mittels der Feststellbremsfunktion betätigter Bremszylinder könnte diesen Bremszylinder bzw. die Bremse mechanisch überbeanspruchen. Der Bremszylinder bzw. die Bremse könnte einen Defekt erleiden und ausfallen. Einer derartigen Überbeanspruchung der Bremse durch eine Addition der mittels des Federspeicherteils 22 und mittels des Membranteils 6 bereitgestellten und den Bremszylinder 8 betätigenden Kräfte wird dadurch entgegengewirkt, dass ein Luftdruck in dem Federspeicherteil 22 immer wenigstens so hoch wie ein Luftdruck in dem Membranteil 6, d.h. wie der Betriebsbremsdruck gehalten wird. Solange der Bremszylinder 8 mittels der Feder in dem Federspeicherteil 22 die Bremse betätigt, führt eine Erhöhung des Luftdrucks in dem Membranteil 6 zu einer Reduzierung der mittels des Federspeicherteils 22 durch den Bremszylinder 8 bereitgestellten Kraft. Diese Reduzierung wird durch eine Erhöhung des Luftdrucks in dem Federspeicherteil 22 auf den erhöhten Betriebsbremsdruck erreicht.

Nach dem Stand der Technik ist eine derartige Überlastschutzfunktion für den Bremszylinder 8 bzw. für die Bremse mittels des Überlastschutzventils 26 realisiert. Dieses Überlastschutzventil 26 wählt nämlich von dem Feststellbremsdruck und dem Betriebsbremsdruck den höheren dieser beiden Drücke aus und belüftet mit diesem höheren Druck über eine Druckluftleitung 28 den Federspeicherteil 22 des Bremszylinders 8.

Nach dem Stand der Technik ist somit ein Ventil, nämlich dieses Überlastschutzventil 26, vorgesehen, welches allein der Überlastschutzfunktion dient. Dieses Überlastschutzventil 26 verteuert die Bremsanlage in der Herstellung. Ferner benötigt das Überlastschutzventil 26 einen gewissen Montageaufwand, so dass die Überlastschutzfunktion für die Bremse bzw. den Bremszylinder 8 der Bremsanlage 2 nach dem Stand der Technik verglichen mit einer Bremsanlage ohne Überlastschutzfunktion zu höheren Kosten führt. Darüber hinaus beansprucht das Überlastschutzventil 26 knappen Platz am Fahrzeug, insbesondere am Fahrzeugrahmen.

Der Erfindung liegt daher das Problem zugrunde, den Platzbedarf und den Montageaufwand zu verringern und Kosten zu senken.

Die Erfindung löst dieses Problem, indem sie die zweite Druckluftleitung über den ersten Entlüftungsausgang mit der ersten Druckluftleitung verbindbar macht. Eine pneumatische Verbindung zwischen zwei Druckluftleitungen meint hierbei, dass in diesen beiden Druckluftleitungen im Wesentlichen der gleiche Luftdruck vorliegt oder sich im Falle einer Luftdruckänderung in einer dieser beiden Leitungen innerhalb kurzer Zeit, insbesondere in deutlich weniger als einer Sekunde, ein im Wesentlichen gleicher Luftdruck in diesen beiden Druckluftleitungen einstellt.

Die Erfindung hat erkannt, dass diese pneumatische Verbindung eine Überlastschutzfunktion bereitstellt und das Überlastschutzventil des Standes der Technik entbehrlich macht. Ein Entlüften des Federspeicherteils zum Betätigen der Bremse ist mittels der Feststellbremsfunktion bei der erfindungsgemäßen Bremsanlage weiterhin möglich, auch wenn auf eine Entlüftung der zweiten Druckluftleitung an die umgebende Atmosphäre in der Feststellbremseinrichtung verzichtet wird.

Vorteilhafterweise ist die zweite Druckluftleitung über den ersten Entlüftungsausgang, die erste Druckluftleitung und einen zweiten Entlüftungsausgang einer Bremspedaleinrichtung entlüftbar. Die Erfindung hat erkannt, dass in der zweiten Druckluftleitung verglichen mit der zur Belüftung des Federspeicherteils des Bremszylinders benötigten Druckluft nur vergleichsweise kleine Luftmengen bewegt werden. Daher kann die Druckluftleitung problemlos über einen zweiten Entlüftungsausgang an der Bremspedaleinrichtung an die Atmosphäre entlüftet werden. Eine Entlüftung der zweiten Druckluftleitung an die Atmosphäre im Bereich der Feststellbremseinrichtung ist daher nicht notwendig.

Alternativ oder zusätzlich ist mittels der Bremspedaleinrichtung in Erwiderung auf eine Betätigung eines Bremspedals dieser Bremspedaleinrichtung ein Bremsanforderungssignal erzeugbar. In Erwiderung auf dieses Bremsanforderungssignal ist der Betriebsbremsdruck elektropneumatisch aussteuerbar und in der ersten Druckluftleitung bereitstellbar.

Der Luftdruck wird hierbei vorzugsweise in einer Bremssteuereinrichtung elektropneumatisch ausgesteuert. Insbesondere kann es sich bei dieser Bremssteuereinrichtung um ein Hinterachsbremssteuermodul handeln, welches vorzugsweise im Bereich der Hinterachse des Fahrzeugs verbaut ist.

Diese Bremssteuereinrichtung weist vorzugsweise einen dritten Entlüftungsausgang auf, über welchen die zweite Druckluftleitung über den ersten Entlüftungsausgang und die erste Druckluftleitung entlüftbar ist.

Vorteilhafterweise weist die Feststellbremseinrichtung wenigstens eines der folgenden Bauteile auf: ein erstes Elektromagnetventil, insbesondere ein Bistabilventil zur Aussteuerung des Feststellbremsdrucks, ein zweites Elektromagnetventil zum Schalten zwischen einer pneumatischen Verbindung und einem Absperren zwischen der zweiten Druckluftleitung und dem Belüftungseingang bzw. dem ersten Entlüftungsausgang, ein Relaisventil zur luftmengenmäßigen Verstärkung des Feststellbremsdrucks und ein drittes Elektromagnetventil zur wahlweisen Belüftung einer vierten Druckluftleitung mit Druckluft, welche entweder in einem ersten Schaltzustand dieses Elektromagnetventils den Vorratsluftdruck oder in einem zweiten Schaltzustand dieses Elektromagnetventils den ausgesteuerten Feststellbremsdruck aufweist. Mittels dieser vierten Druckluftleitung ist zur Bereitstellung einer Anhängerkontrollfunktion somit in dem ersten Schaltzustand ein Anhängersteuerventil mit Druckluft, welche den Vorratstuftdruck aufweist, belüftbar.

Weitere bevorzugte Ausführungsformen ergeben sich aus den Unteransprüchen sowie aus dem anhand der Zeichnung näher erläuterten Ausführungsbeispiel. In der Zeichnung zeigen:
- Fig. 1: eine Bremsanlage nach dem Stand der Technik mit Überlastschutzfunktion für eine Bremse in vereinfachter schematischer Darstellung und
- Fig. 2: eine erfindungsgemäße Bremsanlage mit Überlastschutzfunktion für eine Bremse in vereinfachter schematischer Darstellung.

Fig. 1 wurde bereits mit ihren zur Veranschaulichung des Standes der Technik wesentlichen Merkmalen in der Beschreibungseinleitung beschrieben.

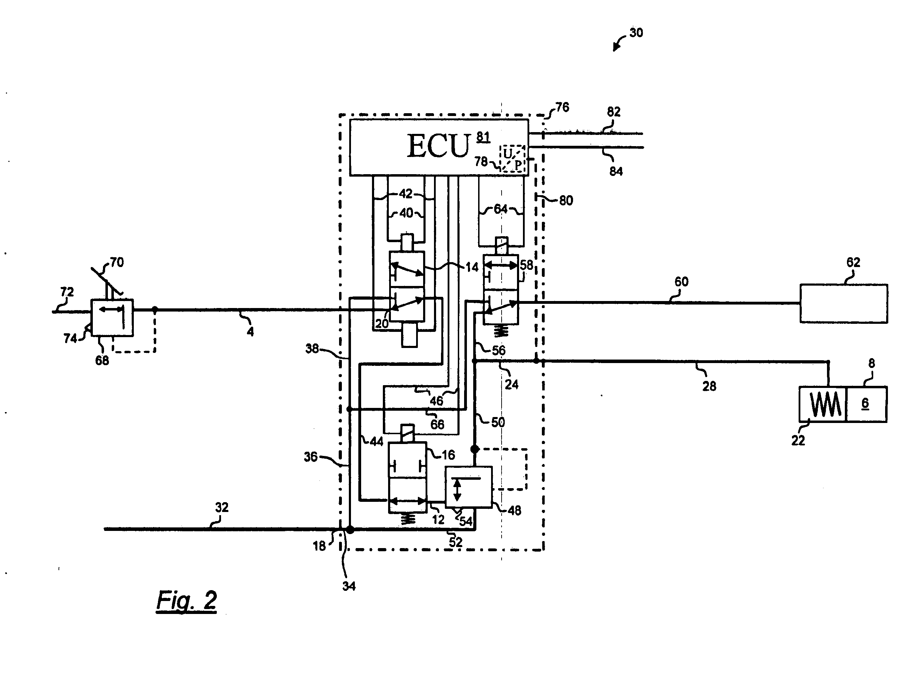

Fig. 2 zeigt eine erfindungsgemäße Bremsanlage 30, welche in Teilen der Bremsanlage 2 des Standes der Technik gemäß Fig. 1 gleicht. Insofern bezeichnen gleiche Bezugsziffern gleiche Bauteile und es wird auf die entsprechenden obigen Ausführungen verwiesen.

Bei dieser Bremsanlage 30 gelangt Druckluft mit einem Vorratsluftdruck aus einem nicht dargestellten Druckluftvorratsbehälter über eine Druckluftleitung 32 an den Belüftungseingang 18. Druckluftleitungen 34, 36 und 38 führen diese Druckluft an ein erstes Elektromagnetventil 14, welches als Bistabilventil ausgeführt ist. Dieses Bistabilventil 14 ist in zwei Schaltzuständen schaltbar. Hierfür werden Magnetspulen über elektrische Leitungen 40 und 42 zum Schalten zwischen diesen Zuständen angesteuert. Das Bistabilventil 14 verharrt auch im Falle eines Stromausfalls in seinem augenblicklichen Schaltzustand, was ein ungewolltes Einlegen oder Lösen von Bremsen bei einem Stromausfall verhindert und somit zur Sicherheit der Bremsanlage beiträgt. Alternativ kann das Bistabilventil 14 mit nur einer Spule ausgestattet sein und durch Umpolung des Spannungsimpulses in der Leitung 40 in den anderen stabilen Zustand wechseln. In dieser alternativen Ausführungsform würden die Leitungen 42 entfallen.

In einem ersten, nicht dargestellten, Schaltzustand verbindet das Bistabilventil 14 die Druckluftleitung 38 pneumatisch mit einer Druckluftleitung 44. Im Falle des unbestromten Elektromagnetventils 16 ist darüber hinaus diese Druckluftleitung 44 und damit auch der Drucklufteingang 18 mit der zweiten Druckluftleitung 12 pneumatisch verbunden.

In einem dargestellten zweiten Schaltzustand des Bistabilventils 14 ist dagegen die zweite Druckluftleitung 12 über das Elektromagnetventil 16, die Druckluftleitung 44, dieses Bistabilventil 14 und den ersten Entlüfiungsausgang 20 zur ersten Druckluftleitung 4 entlüftbar. Der Feststellbremsdruck in der Druckluftleitung 12 kann somit in dem ersten Schaltzustand des Bistabilventils 14 bis maximal zu dem Vorratsluftdruck erhöht werden sowie in dem zweiten Schaltzustand des Bistabilventils 14 minimal zu dem pneumatischen Druck in der ersten Druckluftleitung 4 reduziert werden.

Ein Halten des somit aussteuerbaren und in der Druckluftleitung 44 bereitstellbaren Luftdrucks ist mittels des zweiten Elektromagnetventils 16 möglich. In einem zweiten, bestromten, Schaltzustand dieses zweiten Elektromagnetventils 16 ist nämlich die zweite Druckluftleitung 12 von der Druckluftleitung 44 und somit sowohl von dem Drucklufteingang 18 als auch von dem ersten Druckluftausgang 20 absperrbar. Zum Schalten ist das zweite Elektromagnetventil 16 hierbei mittels elektrischer Leitungen 46 elektrisch ansteuerbar. Ein ausgesteuerter Feststellbremsdruck kann somit in dem bestromten Schaltzustand des zweiten Elektromagnetventils 16 in der zweiten Druckluftleitung 12 gehalten werden, ohne dass hierfür ständig zwischen den beiden Schaltzuständen des Bistabilventils 14 umgeschaltet werden müsste. In einem ersten, unbestromten, Schaltzustand dieses zweiten Elektromagnetventils 16 ist dagegen diese Druckluftleitung 44 pneumatisch mit der zweiten Druckluftleitung 12 verbunden. Somit braucht sowohl im Fahrbetrieb als auch im abgestellten Zustand des Fahrzeugs, d.h. sowohl im Falle der mit dem Vorratsluftdruck belüfteten als auch im Falle der entlüfteten bzw. mit dem Betriebsbremsdruck belüfteten zweiten Druckluftleitung 12, keines der Elektromagnetventile 14 und 16 bestromt werden. Somit ist ein stromsparender Betrieb der Bremsanlage 30 möglich.

Mittels eines Relaisventils 48 wird in einer dritten Druckluftleitung 50 Druckluft mit dem Feststellbremsdruck bereitgestellt. Diese Druckluft ist mittels des Relaisventils 48 hierbei in größerer Luftmenge als über die zweite Druckluftleitung 12 bereitstellbar. Mittels des Relaisventils 48 ist die dritte Druckluftleitung 50 nämlich über den Belüftungseingang 18, die Druckluftleitung 34 und eine Druckluftleitung 52 belüftbar. Ein Entlüften der Druckluftleitung 50 bei Absinken des ausgesteuerten Feststellbremsdrucks in der zweiten Druckluftleitung 12 ist über einen vierten Entlüftungsausgang 54 an dem Relaisventil 48 möglich. Das Relaisventil 48 ermöglicht es aufgrund der Entlüftungsmöglichkeit der dritten Druckluftleitung 50 über diesen vierten Entlüftungsausgang 54, die über den ersten Entlüftungsausgang 20 zu entlüftenden Luftmengen vergleichsweise gering zu halten, die deshalb besonders vorteilhaft über die erste Druckluftleitung und eine zur Reduzierung des Betriebsbremsdrucks bereits vorhandene Entlüftungsmöglichkeit dieser ersten Druckluftleitung 4 entlüftet werden können.

Die luftmengenverstärkte Druckluft in der dritten Druckluftleitung 50 wird über eine Druckluftleitung 56, ein drittes Elektromagnetventil 58 und eine vierte Druckluftleitung 60 einem Anhängersteuerventil 62 bereitgestellt. Mittels dieses Anhängersteuerventils 62 ist der Feststellbremsdruck invertierbar. Druckluft mit dem invertierten Feststellbremsdruck ist einem Anhängefahrzeug zur Belüftung von Membranteilen von Bremszylindern zur Abbremsung dieses Anhängefahrzeugs bereitstellbar. Im Falle der mit einem vorgegebenen Mindestluftdruck belüfteten vierten Druckluftleitung 60 sind somit diese Membranteile der Bremszylinder an dem Anhängefahrzeug entlüftet, sofern diese Membranteile nicht mittels der Betriebsbremsfunktion belüftet werden. Im Falle der entlüfteten Druckluftleitung 60 werden hingegen mittels des Anhängersteuerventils 62 diese Membranteile der Bremszylinder an dem Anhängefahrzeug mittels der Feststellbremsfunktion belüftet. Im unbestromten Zustand des dritten Elektromagnetventils 58 sind die dritte Druckluftleitung 50 und die vierte Druckluftleitung 60 pneumatisch miteinander verbunden.

Das dritte Elektromagnetventil 58 ist über elektrische Leitungen 64 ansteuerbar und mittels Bestromung einer Magnetspule in einen zweiten Schaltzustand schaltbar. In diesem zweiten Schaltzustand ist ein Druckluftvorratsbehälter über die Druckluftleitung 32, den Belüftungseingang 18, die Druckluftleitungen 34 und 36, eine Druckluftleitung 66 und das dritte Elektromagnetventil 58 mit der vierten Druckluftleitung 60 pneumatisch verbindbar. Über dieses dritte Elektromagnetventil 58 ist die vierte Druckluftleitung 60 und somit das Anhängersteuerventil 62 in dem zweiten Schaltzustand dieses dritten Elektromagnetventils 58 mit einem Vorratsluftdruck belüftbar. Im Falle der belüfteten vierten Druckluftleitung 60 und der gleichzeitig entlüfteten zweiten Druckluftleitung 12 bzw. dritten Druckluftleitung 50 wirkt die Feststellbremsfunktion lediglich auf den Bremszylinder 8 und nicht auf mittels des Anhängersteuerventils 62 pneumatisch angesteuerte Bremszylinder eines Anhängefahrzeugs.

Für die Betriebsbremsfunktion ist der Betriebsbremsdruck in der ersten Druckluftleitung 4 mittels einer Bremspedaleinrichtung 68 aussteuerbar. Hierfür weist die Bremspedaleinrichtung 68 ein Bremspedal 70 auf, welches vornehmlich mit einem Fuß betätigt werden kann. Darüber hinaus ist diese Bremspedaleinrichtung 68 über eine Druckluftleitung 72 mit einem nicht dargestellten Druckluftvorratsbehälter verbunden, so dass in Erwiderung auf eine Betätigung des Bremspedals 70 die erste Druckluftleitung 4 mit Druckluft aus diesem Druckluftvorratsbehälter belüftbar ist. Über einen zweiten Entlüftungsausgang 74 an dieser Bremspedaleinrichtung 68 ist die erste Druckluftleitung 4 entlüftbar. Insgesamt ist somit in Erwiderung auf eine Betätigung des Bremspedals 70 mittels dieser Bremspedaleinrichtung 68 pneumatisch der Betriebsbremsdruck aussteuerbar und der ersten Druckluftleitung 4 bereitstellbar. Über wenigstens eine nicht dargestellte Druckluftleitung ist der Membranteil 6 des Bremszylinders 8 mit Druckluft, welche diesen Betriebsbremsdruck aufweist, belüftbar. Im Falle des belüfteten Membranteils 6 des Bremszylinders 8 ist die Bremse mittels dieses Bremszylinders 8 mittels der Betriebsbremsfunktion betätigt.

Die Bremspedaleinrichtung 68 ist über die erste Druckluftleitung 4, den ersten Entlüftungsausgang 20, das Bistabilventil 14, die Druckluftleitung 44 und das Elektromagnetventil 16 mit der zweiten Druckluftleitung 12 pneumatisch verbindbar. Sofern die zweite Druckluftleitung 12 nicht von der Druckluftleitung 44 über das bestromte Elektromagnetventil 16 abgesperrt ist, stellt sich als Feststellbremsdruck in der zweiten Druckluftleitung 12 somit immer wenigstens der mittels der Bremspedaleinrichtung 68 ausgesteuerte Betriebsbremsdruck ein. Eine Entlüftung der zweiten Druckluftleitung 12 ist derart begrenzbar, dass der ausgesteuerte Feststellbremsdruck 12 immer wenigstens so hoch ist wie der ausgesteuerte Betriebsbremsdruck in der ersten Druckluftleitung 4.

Der Federspeicherteil 22 des Bremszylinders 8 ist direkt, d.h. ohne Zwischenschaltung eines Überlastschutzventils, über die Druckluftleitungen 24 und 28 mit der dritten Druckluftleitung 50 pneumatisch verbunden. Gegebenenfalls kann dieser Federspeicherteil 22 auch, bspw. unter Zwischenschaltung eines weiteren, nicht dargestellten, Ventils, über die Druckluftleitungen 24 und 28 mit dieser dritten Druckluftleitung 50 verbindbar sein. In dem Federspeicherteil 22 stellt sich somit immer der Feststellbremsdruck ein, welcher mittels der Feststellbremsfunktion in einer die Elektromagnetventile aufweisenden Feststellbremseinrichtung 76 aussteuerbar ist und welcher in der zweiten Druckluftleitung 12 bzw. in der dritten Druckluftleitung 50 bereitstellbar ist.

Zu Kontrollzwecken und zur Einregelung des mittels der Feststellbremseinrichtung 76 ausgesteuerten Feststellbremsdrucks ist ein Drucksensiermittel 78 vorgesehen, welches über eine Druckluftleitung 80 und die Druckluftleitung 24 mit der dritten Druckluftleitung 50 pneumatisch verbunden ist. In der Druckluftleitung 80 liegt somit der ausgesteuerte Feststellbremsdruck vor, welcher mittels des Drucksensiermittels 78 als Ist-Wert sensierbar ist. Dieser Ist-Wert wird von einer Steuereinrichtung 81, in welcher dieses Drucksensiermittel 78 angeordnet ist, zum Vergleich mit einem vorgegebenen bzw. vorgebbaren Soll-Wert für einen einzustellenden Feststellbremsdruck herangezogen. Diese Steuereinrichtung 81 steuert ferner die Elektromagnetventile 14, 16 und 58 elektrisch an. Daher ist der Feststellbremsdruck mittels der Steuereinrichtung 81 durch entsprechende Ansteuerung der Elektromagnetventile 14 und 16 leicht derart einregelbar, dass sich der Ist-Wert dem Soll-Wert angleicht. Ein Betätigen von Bremsen mittels der Feststellbremsfunktion ist somit fein dosierbar möglich.

Mit der Steuereinrichtung 81 sind ferner mehrere elektrische Leitungen verbunden. Über zwei elektrische Leitungen 82 und 84 ist eine CAN-Datenverbindung zu anderen, insbesondere elektrischen bzw. elektronischen, Einrichtungen der Bremsanlage 30 und ggf. des Fahrzeugs gegeben.

In Abweichung von diesem Ausführungsbeispiel gemäß Fig. 2 kann der Betriebsbremsdruck in der ersten Druckluftleitung 4 auch etektropneumatisch ausgesteuert werden. Hierbei wird in Erwiderung auf eine Betätigung des Bremspedals 70 ein Bremsanforderungssignal erzeugt, in dessen Erwiderung von einer Bremssteuereinrichtung mittels wenigstens eines darin enthaltenen Elektromagnetventils der Betriebsbremsdruck ausgesteuert wird. Ein Redundanzdruck kann hierbei zusätzlich pneumatisch in Erwiderung auf die Betätigung des Bremspedals 70 ausgesteuert werden.

Der Betriebsbremsdruck in der ersten Druckluftleitung 4 kann im Falle der bestimmungsgemäß funktionierenden Bremssteuereinrichtung elektropneumatisch und anderenfalls pneumatisch ausgesteuert sein. Die zweite Druckluftleitung 12 kann in beiden Fällen über die Bremsteuereinrichtung, in beiden Fällen über die Bremspedaleinrichtung 68 oder auch im Falle der bestimmungsgemäß funktionierenden Bremssteuereinrichtung über einen dritten Entlüftungsausgang an dieser Bremssteuereinrichtung oder anderenfalls über den zweiten Entlüftungsausgang 74 der Bremspedaleinrichtung 68 entlüftbar sein.

Der Feststellbremsdruck kann alternativ zu dem gezeigten Ausführungsbeispiel auch mittels anderer Elektromagnetventile und/oder anderer pneumatischer Verschaltung der Elektromagnetventile 14 und 16 ausgeführt sein. Die Erfindung ist nicht auf die in Fig. 2 gezeigte Ventilanordnung zur Aussteuerung des Feststellbremsdrucks beschränkt. In jedem Fall ist jedoch der Feststellbremsdruck elektropneumatisch mittels einer Feststellbremseinrichtung 76 aussteuerbar, wobei diese Feststellbremseinrichtung 76 den Belüftungseingang 18 aufweist, über welchen Druckluft mit einem Vorratsluftdruck bereitstellbar ist, wobei mittels dieser Feststellbremseinrichtung 76 ein ausgesteuerter Feststellbremsdruck bereitstellbar ist und wobei diese Feststellbremseinrichtung 76 einen Entlüftungsausgang 20 aufweist, wobei mittels eines Entlüftens über diesen Entlüfiungsausgang 20 der Feststellbremsdruck reduzierbar ist. Erfindungsgemäß ist mit diesem ersten Entlüftungsausgang 20 die erste Druckluftleitung 4, welche Druckluft mit dem ausgesteuerten Betriebsbremsdruck führt, pneumatisch verbunden, so dass dieses Entlüften über die erste Druckluftleitung 4 möglich ist, solange der ausgesteuerte Feststellbremsdruck den ausgesteuerten Betriebsbremsdruck übersteigt. Hierdurch wird eine Überlastschutzfunktion für den Bremszylinder 8 erreicht, indem bei betätigter Betriebsbremse eine Belüftung des Federspeicherteils 22 mit wenigstens dem Betriebsbremsdruck der Kraft der Feder in diesem Federspeicherteil 22 entgegenwirkt. Im Gegensatz zum Stand der Technik kommt die Erfindung hierfür ohne das für die Überlastschutzfunktion üblicherweise verwendete Überlastschutzventil aus. Hierdurch wird Platz und Montageaufwand gespart, da sich die Anzahl der Bauteile verringert. Die Erfindung verbessert somit vorteilhaft die bekannten Bremsanlagen mit Überlastschutzfunktion.

## Patentansprüche

1. Druckluftbetriebene Bremsanlage (2) für ein Fahrzeug, wobei diese Bremsanlage (2) eine erste Druckluftleitung (4) aufweist, in welcher Druckluft mit einem aussteuerbaren Betriebsbremsdruck bereitstellbar ist, mittels dem Membranteile (6) von Bremszylindern (8) für eine Betriebsbremsfunktion dieses Fahrzeugs belüftbar sind, und wobei diese Bremsanlage (2) eine Feststellbremseinrichtung (76) mit einer zweiten Druckluftleitung (12) aufweist, wobei in dieser zweiten Druckluftleitung (12) mittels dieser Feststellbremseinrichtung (76) Druckluft mit einem elektropneumatisch aussteuerbaren Feststellbremsdruck bereitstellbar ist, mittels dem Federspeicherteile (22) von Bremszylindern (8), insbesondere von die Membranteile (6) umfassenden kombinierten Federspeicher/Membranbremszylindern (8), zur Bereitstellung einer Feststellbremsfunktion dieses Fahrzeugs belüftbar sind, wobei diese Feststellbremseinrichtung (76) einen Belüftungseingang (18) aufweist, über welchen die zweite Druckluftleitung (12) zur Erhöhung des Feststellbremsdrucks mit Druckluft belüftbar ist, und wobei diese Feststellbremseinrichtung (76) einen ersten Entlüftungsausgang (20) aufweist, über welchen diese zweite Druckluftleitung (12) zur Reduzierung dieses Feststellbremsdrucks entlüftbar ist, **dadurch gekennzeichnet, dass** die zweite Druckluftleitung (12) pneumatisch über den ersten Entlüftungsausgang (20) mit der ersten Druckluftleitung (4) verbindbar ist.

2. Bremsanlage nach Anspruch 1, **gekennzeichnet durch** eine Bremspedaleinrichtung (68) mit einem Bremspedal (70) und einem zweiten Entlüftungsausgang (74), wobei in Erwiderung auf eine Betätigung dieses Bremspedals (70) pneumatisch der Betriebsbremsdruck aussteuerbar und in der ersten Druckluftleitung (4) bereitstellbar ist und wobei die zweite Druckluftleitung (12) über den ersten Entlüftungsausgang (20), die erste Druckluftleitung (4) und den zweiten Entlüftungsausgang (74) entlüftbar ist.

3. Bremsanlage nach Anspruch 1 oder 2, **gekennzeichnet durch** eine Bremspedaleinrichtung (68) mit einem Bremspedal (70), wobei in Erwiderung auf eine Betätigung dieses Bremspedals (70) ein Bremsanforderungssignal erzeugbar und in Erwiderung auf dieses Bremsanforderungssignal der Betriebsbremsdruck elektropneumatisch aussteuerbar und Druckluft mit diesem Betriebsbremsdruck in der ersten Druckluftleitung (4) bereitstellbar ist.

4. Bremsanlage nach Anspruch 3, **gekennzeichnet durch** eine Bremssteuereinrichtung, insbesondere ein Hinterachsbremssteuermodul, mittels welcher der Betriebsbremsdruck elektropneumatisch aussteuerbar und Druckluft mit diesem Betriebsbremsdruck in der ersten Druckluftleitung (4) bereitstellbar ist.

5. Bremsanlage nach Anspruch 4, **dadurch gekennzeichnet, dass** die Bremssteuereinrichtung einen dritten Entlüftungsausgang aufweist, wobei die zweite Druckluftleitung (12) über den ersten Entlüftungsausgang (20), die erste Druckluftleitung (4) und diesen dritten Entlüftungsausgang entlüftbar ist.

6. Bremsanlage nach einem der vorherigen Ansprüche, **dadurch gekennzeichnet, dass** die Feststellbremseinrichtung (76) ein erstes Elektromagnetventil (14), insbesondere ein Bistabilventil, welches zwei Schaltzustände bereitstellt, aufweist, wobei in einem ersten Schaltzustand die zweite Druckluftleitung (12) über den Belüftungseingang (18) belüftbar ist und wobei in einem zweiten Schaltzustand diese zweite Druckluftleitung (12) über den ersten Entlüftungsausgang (20) mit der ersten Druckluftleitung (4) pneumatisch verbindbar ist.

7. Bremsanlage nach einem der vorherigen Ansprüche, **dadurch gekennzeichnet, dass** die Feststellbremseinrichtung (76) ein zweites Elektromagnetventil (16), welches wenigstens zwei Schaltzustände bereitstellt, aufweist, wobei in einem ersten, insbesondere bestromten, Schaltzustand, die zweite Druckluftleitung (12) sowohl von dem Belüftungseingang (18) als auch von dem ersten Entlüftungsausgang (20) absperrbar ist und wobei in einem zweiten, insbesondere unbestromten, Schaltzustand diese zweite Druckluftleitung (12) mit dem Belüftungseingang (18) oder dem ersten Entlüftungsausgang (20) pneumatisch verbindbar ist.

8. Bremsanlage nach einem der vorherigen Ansprüche, **dadurch gekennzeichnet, dass** in die Feststellbremseinrichtung (76) ein Relaisventil (48) integriert ist, mittels dem eine dritte Druckluftleitung (50) über den Belüftungseingang (18) derart belüftbar und diese dritte Druckluftleitung (50) über einen vierten Entlüftungsausgang (54) derart entlüftbar ist, dass in der dritten Druckluftleitung (50) im Wesentlichen der Feststellbremsdruck vorliegt.

9. Bremsanlage nach einem der vorherigen Ansprüche, **dadurch gekennzeichnet, dass** die Feststellbremseinrichtung (76) ein drittes Elektromagnetventil (58) mit wenigstens zwei Schaltzuständen zur Bereitstellung einer Anhängerkontrollfunktion aufweist, wobei eine vierte Druckluftleitung (60) zur Verbindung mit einem Anhängersteuerventil (62) über den Belüftungseingang (18) in einem ersten, insbesondere bestromten, Schaltzustand mit einem Vorratsluftdruck belüftbar ist und in einem zweiten, insbesondere unbestromten, Schaltzustand diese vierte Druckluftleitung (60) zur Belüftung mit dem Feststellbremsdruck mit der zweiten bzw. dritten Druckluftleitung (12; 50) pneumatisch verbindbar ist.

## Claims

1. Pneumatically operated brake system (2) for a vehicle, wherein said brake system (2) has a first compressed air line (4), in which compressed air at a controllable service brake pressure can be provided, by means of which diaphragm parts (6) of brake cylinders (8) can be supplied with air for a service brake function of said vehicle, and wherein said brake system (2) has a parking brake device (76) having a second compressed air line (12), wherein compressed air can be provided in said second compressed air line (12) by means of said parking brake device (76) at an electropneumatically controllable parking brake pressure, by means of which spring brake parts (22) of brake cylinders (8), in particular of combined spring brake/diaphragm brake cylinders (8) including the diaphragm parts (6), can be supplied with air in order to provide a parking brake function of said vehicle, wherein said parking brake device (76) has an air supply inlet (18), via which the second compressed air line (12) can be supplied with compressed air in order to increase the parking brake pressure, and wherein said parking brake device (76) has a first air discharge outlet (20), via which air can be discharged from said second compressed air line (12) in order to reduce said parking brake pressure, **characterized in that** the second compressed air line (12) can be connected pneumatically to the first compressed air line (4) via the first air discharge outlet (20).

2. Brake system according to Claim 1, **characterized by** a brake pedal device (68) having a brake pedal (70) and a second air discharge outlet (74), wherein the service brake pressure can be controlled pneumatically in response to an actuation of said brake pedal (70) and can be provided in the first compressed air line (4), and wherein air can be discharged from the second compressed air line (12) via the first air discharge outlet (20), the first compressed air line (4) and the second air discharge outlet (74).

3. Brake system according to Claim 1 or 2, **characterized by** a brake pedal device (68) having a brake pedal (70), wherein, in response to an actuation of said brake pedal (70), a braking request signal can be produced, and, in response to said braking request signal, the service brake pressure can be controlled electropneumatically and compressed air at said service brake pressure can be provided in the first compressed air line (4).

4. Brake system according to Claim 3, **characterized by** a brake control device, in particular a rear axle brake control module, by means of which the service brake pressure can be controlled electropneumatically and compressed air at said service brake pressure can be provided in the first compressed air line (4).

5. Brake system according to Claim 4, **characterized in that** the brake control device has a third air discharge outlet, wherein air can be discharged from the second compressed air line (12) via the first air discharge outlet (20), the first compressed air line (4) and said third air discharge outlet.

6. Brake system according to one of the preceding claims, **characterized in that** the parking brake device (76) has a first solenoid valve (14), in particular a bistable valve, which provides two control states, wherein, in a first control state, the second compressed air line (12) can be supplied with air via the air supply inlet (18) and, in a second control state, said second compressed air line (12) can be connected pneumatically to the first compressed air line (4) via the first air discharge outlet (20).

7. Brake system according to one of the preceding claims, **characterized in that** the parking brake device (76) has a second solenoid valve (16), which provides at least two control states, wherein, in a first, in particular energized, control state, the second compressed air line (12) can be shut off both from the air supply inlet (18) and from the first air discharge outlet (20) and wherein, in a second, in particular deenergized, control state, said second compressed air line (12) can be connected pneumatically to the air supply inlet (18) or the first air discharge outlet (20).

8. Brake system according to one of the preceding claims, **characterized in that** there is integrated into the parking brake device (76) a relay valve (48), by means of which a third compressed air line (50) can be supplied with air via the air supply inlet (18) and air can be discharged from said third compressed air line (50) via a fourth air discharge outlet (54) in such a way that the pressure in the third compressed air line (50) is substantially the parking brake pressure.

9. Brake system according to one of the preceding claims, **characterized in that** the parking brake device (76) has a third solenoid valve (58) having at least two control states in order to provide a trailer monitoring function, wherein, in a first, in particular energized, control state, a fourth compressed air line (60) for connection to a trailer control valve (62) can be supplied with air at a reservoir air pressure via the air supply inlet (18) and, in a second, in particular deenergized, control state, said fourth compressed air line (60) can be connected pneumatically to the second and third compressed air line (12; 50) for the purpose of supplying air at the parking brake pressure.

## Revendications

1. Système de frein (2) à commande à air comprimé pour un véhicule, ce système de frein (2) présentant une première conduite d'air comprimé (4), dans laquelle de l'air comprimé peut être fourni avec une pression de frein de service réglable, au moyen de laquelle des parties formant membrane (6) de cylindres de frein (8) peuvent être ventilées pour une fonction de frein de service de ce véhicule, et ce système de frein (2) présentant un dispositif de frein de stationnement (76) avec une deuxième conduite d'air comprimé (12), de l'air comprimé avec une pression de frein de stationnement réglable de manière électropneumatique pouvant être fourni dans cette deuxième conduite d'air comprimé (12) au moyen de ce dispositif de frein de stationnement (76), au moyen de laquelle pression de frein de stationnement des parties formant accumulateur à ressort (22) de cylindres de frein (8), en particulier d'une combinaison accumulateur à ressort/cylindres de frein à membrane (8) comprenant les parties formant membrane (6), peuvent être ventilées pour fournir une fonction de frein de stationnement de ce véhicule, ce dispositif de frein de stationnement (76) présentant une entrée de ventilation (18) par le biais de laquelle la deuxième conduite d'air comprimé (12) peut être ventilée avec de l'air comprimé pour augmenter la pression de frein de stationnement, et ce dispositif de frein de stationnement (76) présentant une première sortie de désaérage (20), par le biais de laquelle cette deuxième conduite d'air comprimé (12) peut être désaérée pour réduire cette pression de frein de stationnement, **caractérisé en ce que** la deuxième conduite d'air comprimé (12) peut être raccordée pneumatiquement par le biais de la première sortie de désaérage (20) à la première conduite d'air comprimé (4).

2. Système de frein selon la revendication 1, **caractérisé par** un dispositif de pédale de frein (68) avec une pédale de frein (70) et une deuxième sortie de désaérage (74), la pression de frein de service pouvant être réglée pneumatiquement en réponse à un actionnement de cette pédale de frein (70) et pouvant être fournie dans la première conduite d'air comprimé (4), et la deuxième conduite d'air comprimé (12) pouvant être désaérée par le biais de la première sortie de désaérage (20), de la première conduite d'air comprimé (4) et de la deuxième sortie de désaérage (74).

3. Système de frein selon la revendication 1 ou 2, **caractérisé par** un dispositif de pédale de frein (68) avec une pédale de frein (70), un signal de demande de freinage pouvant être généré en réponse à un actionnement de cette pédale de frein (70), et en réponse à ce signal de demande de freinage, la pression de frein de service pouvant être réglée de manière électropneumatique et de l'air comprimé pouvant être fourni avec cette pression de frein de service dans la première conduite d'air comprimé (4).

4. Système de frein selon la revendication 3, **caractérisé par** un dispositif de commande de frein, en particulier un module de commande de frein d'essieu arrière, au moyen duquel la pression de frein de service peut être réglée de manière électropneumatique et de l'air comprimé peut être fourni avec cette pression de frein de service dans la première conduite d'air comprimé (4).

5. Système de frein selon la revendication 4, **caractérisé en ce que** le dispositif de commande de frein présente une troisième sortie de désaérage, la deuxième conduite d'air comprimé (12) pouvant être désaérée par le biais de la première sortie de désaérage (20), de la première conduite d'air comprimé (4) et de cette troisième sortie de désaérage.

6. Système de frein selon l'une quelconque des revendications précédentes, **caractérisé en ce que** le dispositif de frein de stationnement (76) présente une première électrovanne (14), en particulier une vanne bistable, qui fournit deux états de commutation, la deuxième conduite d'air comprimé (12) pouvant être ventilée par le biais de l'entrée de ventilation (18) dans un premier état de commutation, et cette deuxième conduite d'air comprimé (12) pouvant être connectée pneumatiquement par le biais de la première sortie de désaérage (20) à la première conduite d'air comprimé (4) dans un deuxième état de commutation.

7. Système de frein selon l'une quelconque des revendications précédentes, **caractérisé en ce que** le dispositif de frein de stationnement (76) présente une deuxième électrovanne (16) qui fournit au moins deux états de commutation, la deuxième conduite d'air comprimé (12) pouvant être bloquée à la fois vis-à-vis de l'entrée de ventilation (18) et de la première sortie de désaérage (20) dans un premier état de commutation, notamment alimenté en courant, et cette deuxième conduite d'air comprimé (12) pouvant être raccordée pneumatiquement à l'entrée de ventilation (18) ou à la première sortie de désaérage (20) dans un deuxième état de commutation, notamment non alimenté en courant.

8. Système de frein selon l'une quelconque des revendications précédentes, **caractérisé en ce que** dans le dispositif de frein de stationnement (76) est intégrée une soupape-relais (48), au moyen de laquelle une troisième conduite d'air comprimé (50) peut être ventilée par le biais de l'entrée de ventilation (18) et cette troisième conduite d'air comprimé (50) peut être désaérée par le biais d'une quatrième sortie de désaérage (54) de telle sorte qu'il règne dans la troisième conduite d'air comprimé (50) essentiellement la pression de frein de stationnement.

9. Système de frein selon l'une quelconque des revendications précédentes, **caractérisé en ce que** le dispositif de frein de stationnement (76) présente une troisième électrovanne (58) avec au moins deux états de commutation pour fournir une fonction de contrôle de remorque, une quatrième conduite d'air comprimé (60) pour la connexion à une soupape de commande de remorque (62) pouvant être ventilée avec une pression d'air de réserve par le biais de l'entrée de ventilation (18) dans un premier état de commutation, notamment alimenté en courant, et cette quatrième conduite d'air comprimé (60) pouvant être raccordée pneumatiquement à la deuxième ou la troisième conduite d'air comprimé (12 ; 50) pour la ventilation avec la pression de frein de stationnement dans un deuxième état de commutation, notamment non alimenté en courant.
